# EUROPÄISCHE PATENTSCHRIFT

(11) **EP 3 105 562 B1**
(45) Veröffentlichungstag und Bekanntmachung des Hinweises auf die Patenterteilung: **13.03.2019**
(21) Anmeldenummer: 14736321.2
(22) Anmeldetag: 16.06.2014
(51) Int. Cl.: G01L 9/00, G01L 19/06

(54) **DRUCKMESSZELLE**
PRESSURE-MEASURING CELL
CELLULE DE MESURE DE PRESSION

(30) Priorität: 12.02.2014 DE 102014101700
(43) Veröffentlichungstag der Anmeldung: 21.12.2016
(73) Patentinhaber: VEGA Grieshaber KG, 77709 Wolfach (DE)
(72) Erfinder: JACOB, Jörn, 77709 Wolfach (DE)
(74) Vertreter: Patentanwälte Bauer Vorberg Kayser
(86) Internationale Anmeldenummer: PCT/EP2014/062597
(87) Internationale Veröffentlichungsnummer: WO 2015/120919

(56) Entgegenhaltungen:
- EP-A1- 0 524 550
- EP-A1- 1 780 525
- EP-A2- 0 373 536
- WO-A1-99/01731
- DE-A1- 3 940 709
- DE-A1- 4 111 119

## Beschreibung

Die vorliegende Erfindung betrifft eine Druckmesszelle gemäß dem Oberbegriff des Patentanspruchs 1.
Aus dem Stand der Technik sind verschiedene Druckmesszellen bekannt, die im Wesentlichen aus einem Messzellenkörper sowie einer an diesem Messzellenkörper über eine Fügung angeordneten Messmembran aufgebaut sind. Die aus dem Stand der Technik bekannten Druckmesszellen sind häufig als kapazitive Druckmesszellen ausgebildet, bei denen sowohl der Messzellenkörper als auch die Messmembran jeweils Metallisierungen tragen, die als Messelektroden bezeichnet werden und einen Messkondensator ausbilden. Durch Einwirken von Druck auf die Messmembran verändert sich der Abstand zwischen diesen Messelektroden, so dass aufgrund der gemessenen Kapazität eine Druckermittlung möglich ist. Solche Messzellen sind zum Beispiel aus EP 1 780 525 A1 bekannt. DE 39 40 709 A1 offenbart einen Druckaufnehmer mit einem Abstandring aus Palladium und/oder Silber. EP 0 373 536 A2 offenbart einen Drucksensor mit einem Stützring und einem Glaslot. WO 99/01731 A1 offenbart eine kapazitive Druckmesszelle mit einer inneren und einer äußeren Elektrode. DE 41 11 119 A1 offenbart eine kapazitive Druckmesszelle mit einen säulen- oder leistenförmigen Abstandsbegrenzer. Bei diesen Druckmesszellen kommt es in der Praxis häufig vor, dass die Messzelle über den normalen Messbereich hinaus belastet wird. Eine sogenannte Überlastgrenze gibt an, wie weit eine solche Messzelle überlastet werden darf, ohne dass sie ihre messtechnischen Eigenschaften verliert bzw. ohne dass sich diese verändern. Keramische Druckmesszellen, bei denen der Messzellenkörper und die Messmembran aus einer technischen Keramik, beispielsweise Al₂O₃ gebildet sind, zeichnen sich durch eine sehr hohe Überlastfähigkeit aus, was durch den mechanischen Ausbau sowie die hohen Festigkeitswerte sowie das sehr gute elastische Verhalten der Keramik bedingt ist. Bei häufigen Überlastungen können aber auch diese Messzellen beschädigt werden und beispielsweise eine unerwünschte Messwertdrift zeigen.

Aus dem Stand der Technik sind Ansätze bekannt, bei denen versucht wird, beispielsweise durch eine konkave Ausgestaltung der Oberfläche des Messzellenkörpers übermäßige Belastungen der Messmembran zu verhindern, so dass auf diese Weise eine Schädigung verhindert wird. Durch eine solche konkave Ausgestaltung des Messzellenkörpers wird die Ermittlung der Messkapazität deutlich erschwert, was als nachteilig empfunden wird.

An diesen Ansätzen wird es außerdem als nachteilig empfunden, dass diese technisch sehr aufwändig zu realisieren und damit teuer in der Herstellung sind.

Es ist die Aufgabe der vorliegenden Erfindung eine Druckmesszelle zur Verfügung zu stellen, die bei gleichzeitig einfacher technischer Realisierung eine gesteigerte Überlastfähigkeit aufweist und messtechnische Nachteile vermeidet.

Diese Aufgabe wird durch eine Druckmesszelle mit den Merkmalen des Patentanspruchs 1 gelöst.

Eine erfindungsgemäße Druckmesszelle weist einen Messzellenkörper und eine vorderseitig an dem Messzellenkörper mittels einer Fügung angeordnete Messmembran auf, wobei der Messzellenkörper und die Messmembran jeweils eine Messeelektrode aufweisen, die einen Messkondensator bilden, wobei an der Messmembran und/oder an dem Messzellenkörper innerhalb der Fügung mindestens ein Stützelement vorgesehen ist. Erfindungsgemäß ist das wenigstens eine Stützelement mittels eines Glaslots hergestellt und die Fügung ist aus einer ersten umlaufenden Glaslotschicht, die an dem Messzellenkörper angeordnet ist, und einer zweiten umlaufenden Glaslotschicht, die an der Messmembran angeordnet ist, gebildet. Der Messzellenkörper und/oder die Messmembran weisen außerdem eine Referenzelektrode auf, wobei die Messelektrode des Messzellenkörpers und/oder der Messmembran in einem Abstand von der Referenzelektrode umgeben ist, wobei diese Messelektrode kreisförmig und die die umgebende Referenzelektrode ringförmig ausgebildet sind, wobei die Referenzelektrode und eine gegenüberliegende Messelektrode des Messzellenkörpers oder der Messmembran einen Referenzkondensator bilden, wobei das wenigstens eine Stützelement als wenigstens ein Stützring ausgebildet ist und der Stützring zwischen der Referenzelektrode und der Messelektrode angeordnet ist.

Auf diese Weise wird vermieden, dass der Stützring respektive das wenigstens eine Stützelement die elektrischen Eigenschaften der Messzelle verändert. Durch das Vorsehen eines solchen Stützelementes wird erreicht, dass bei auftreten einer Überlast, d. h. bei Beaufschlagung der Druckmesszelle über einen zulässigen Wert hinaus, die Messmembran zu einem deutlich früheren Zeitpunkt als dies ohne das Stützelement der Fall wäre, eine mechanische Abstützung erfährt, wodurch auf die Messmembran wirkende Kräfte und daraus resultierende Spannungen deutlich reduziert werden.

Der vorliegenden Erfindung liegt dabei die Erkenntnis zugrunden, dass eine durch Überlast hervorgerufene Messwertdrift bei typischen keramischen Druckmesszellen durch Spannungsüberhöhungen in der Messmembran an einem Innendurchmesser der Fügung, mittels derer die Messmembran an dem Messzellenkörper befestigt ist, auftreten, da in diesem Bereich durch das Auftreten einer Kante ein besonders geringer Biegeradius vorliegt. Aufgrund dieser Spannungsüberhöhungen können in der Messmembran bei häufiger Überlastung an der Membranoberseite Mikrorisse entstehen, welche sich mit der Häufigkeit der Belastung vergrößern. Durch solche Risse werden die elastischen Eigenschaften der Messmembran verändert, so dass dies auch zu einem veränderten Messverhalten im zulässigen Messbereich führt. Ein erfindungsgemäßes Stützelement 11 verringert bei Überlast sowohl eine Druckbelastung der umlaufenden Fügung 5 im Bereich Ihrer Innenkante als auch auftretende Zugspannungen in der Messmembran 7, insbesondere in einem Bereich an der Innenkante der Fügung 5 und insbesondere im Bereich der dem Prozess zugewandten Oberfläche der Messmembran 7.

Eine besonders günstige Anordnung der Messmembran und dem Messzellenkörper kann erreicht werden, wenn die Fügung mittels eines Glaslots, Hartlots oder eines Hartlotes anderer mechanisch hinreichend stabiler Schichten z. B. aufgedampfte oder gesputterte Schichten wie Siliziumoxid, Siliziumcarbid oder dergleichen hergestellt ist.

Eine Fügung mittels eines Glaslotes oder Hartlotes hat sich als günstig herausgestellt, da mit einem Glaslot sowohl zum Messzellenkörper als auch zur Messmembran eine feste Verbindung herstellbar ist, wobei die für die Herstellung der Fügung notwendigen Prozesstemperaturen in einem Bereich liegen, der weder die Messmembran noch die Messelektroden schädigt.

Wenn das wenigstens eine Stützelement ebenfalls aus einem Glaslot hergestellt ist, weist dies zum einen die positiven Eigenschaften wie die Fügung auf und kann zum anderen in einem Prozessschritt, beispielsweise mit der Vorbereitung der Fügung hergestellt werden.

Eine besonders günstige Anordnung ist gegeben, wenn eine Höhe des wenigstens einen Stützelementes und eine radiale Anordnung des wenigstens einen Stützelementes derart aufeinander abgestimmt sind, dass das Stützelement und die Messmembran oder das Stützelement und der Messzellenkörper ab einer Überschreitung eines maximalen Messdruckes von wenigstens 50 % in Anlage gebracht werden, so dass das wenigstens eine Stützelement die Messmembran an dem Messzellenkörper abstützt.

Bei der vorliegenden Ausgestaltung ist es ausschlaggebend, dass sich die Messmembran einer Druckmesszelle druckabhängig durchbiegt und damit den Abstand zwischen der Messmembran und dem Messzellenkörper verringert. Um ab einer Überlast von 50 % eine zuverlässige Abstützung und damit Entlastung der Messmembran zu erreichen, ist daher notwendig, eine Höhe des verwendeten Stützelementes sowie dessen Anordnung so aufeinander abzustimmen, dass abhängig von den mechanischen Eigenschaften der Messmembran eine Abstützung ab einer gewissen Drucküberschreitung erreicht wird. Idealerweise erfolgt eine Abstützung dabei ab einem Überschreiten des maximal zulässigen Messdruckes von 50 %.

Das Stützelement kann dabei eine Höhe von beispielsweise 25 bis 50 % eines Abstandes zwischen dem Messzellenkörper und der Messmembran aufweisen und von der Fügung bevorzugt zwischen 10 und 50 % eines Radius der Messzelle nach innen versetzt angeordnet sein. In einer bevorzugten Ausgestaltungsform weist das wenigstens eine Stützelement in radialer Richtung eine Erstreckung zwischen 100 und 1000 µm auf, wobei sich eine Erstreckung von 500 µm als besonders vorteilhaft herausgestellt hat. Ferner kann das wenigstens eine Stützelement eine Höhe zwischen 5 und 15 µm aufweisen, wobei eine Höhe von etwa 8 µm besonders bevorzugt ist.

Eine besonders effektive Abstützung kann erreicht werden, wenn das wenigstens eine Stützelement als Stützring ausgebildet ist, der vorzugsweise die Messelektrode umgibt.

Insbesondere bei zylindrisch ausgebildeten Messzellen mit kreisrunden Messmembranen kann mit einem derart ausgebildeten Stützring eine gleichmäßige Abstützung der Messmembran im Überlastfall erreicht werden, wobei gleichzeitig eine besonders günstige Herstellung möglich ist.

Insbesondere kann das Stützelement in radialer Richtung einen im Wesentlichen trapezförmigen oder rechteckigen Querschnitt aufweisen, wodurch, insbesondere bei einer Ausbildung mit einer nach innen hin abfallenden Kontur eine verbesserte Anlage der Messmembran an das Stützelement erreicht werden kann.

Ein erfindungsgemäßes Verfahren zum Herstellen einer Druckmesszelle weist wenigstens die folgenden Schritte auf:
- Bereitstellen eines Messzellenkörpers (3),
- Aufbringen einer Metallisierung auf den Messzellenkörper (3) und ggf. Strukturieren derselben zur Bildung einer Messelektrode (9),
- Aufbringen einer ersten umlaufenden Glaslotschicht (5.1) auf den Messzellenkörper (3),
- Bereitstellen einer Messmembran (7),
- Aufbringen einer Metallisierung auf die Messmembran (7) und ggf. Strukturieren derselben zur Bildung einer Messelektrode (9),
- Aufbringen einer zweiten umlaufenden Glaslotschicht (5.1) auf die Messmembran (7) und
- Anordnen von Messmembran (7) und Messzellenkörper (3) aufeinander und verschmelzen der ersten Glaslotschicht und der zweiten Glaslotschicht zur Bildung einer Fügung (5),
und zeichnet sich dadurch aus, dass gleichzeitig mit der ersten Glaslotschicht und/oder mit der zweiten Glaslotschicht eine weitere Glaslotschicht zur Bildung eines Stützelements aufgebracht wird, wobei der Messzellenkörper und/oder die Messmembran eine Referenzelektrode aufweisen, wobei die Messelektrode des Messzellenkörpers und/oder der Messmembran in einem Abstand von der Referenzelektrode umgeben ist, wobei diese Messelektrode kreisförmig und die die umgebende Referenzelektrode ringförmig ausgebildet sind, wobei die Referenzelektrode und eine gegenüberliegende Messelektrode des Messzellenkörpers oder der Messmembran einen Referenzkondensator bilden, wobei das wenigstens eine Stützelement als wenigstens ein Stützring ausgebildet ist und der Stützring zwischen der Referenzelektrode und dieser Messelektrode angeordnet ist.

Durch das erfindungsgemäße Verfahren wird insbesondere erreicht, dass das erfindungsgemäße Stützelement ohne zusätzlich Prozessschritte in ein Herstellungsverfahren für Druckmesszellen eingegliedert werden kann.

In einer bevorzugten Ausführungsform werden sowohl die umlaufenden Glaslotschichten zur Herstellung der Fügung als auch die Glaslotschicht zur Herstellung des wenigstens einen Stützelementes mittels eines Siebdruckverfahrens aufgebracht.

Die vorliegende Erfindung wird nachfolgend unter Bezugnahme auf die beigefügten Figuren eingehend erläutert. Es zeigen:
- Figur 1: einen Querschnitt durch ein erstes Ausführungsbeispiel einer Druckmesszelle und
- Figur 2: einen Querschnitt durch ein zweites Ausführungsbeispiel einer Druckmesszelle.

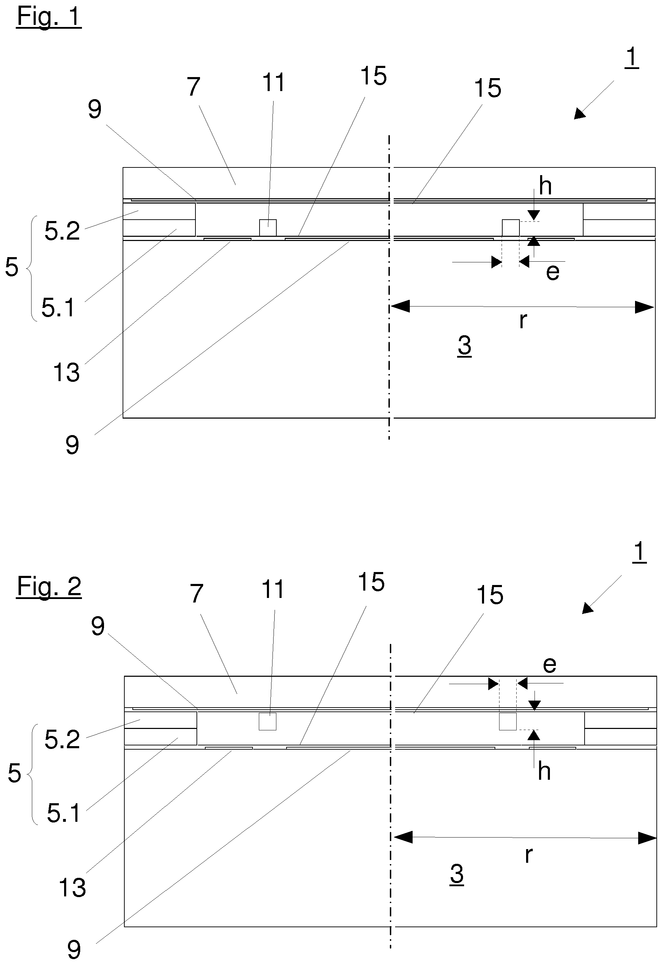

Figur 1 zeigt ein erstes Ausführungsbeispiel einer Druckmesszelle 1.

Die Darstellung in Figur 1 ist eine Schnittdarstellung entlang der Längsachse der ansonsten rotationssymmetrisch aufgebauten Druckmesszelle 1. Die Druckmesszelle 1 besteht im Wesentlichen aus einem Messzellenkörper 3, an dem vorderseitig, d. h. in der vorliegenden Darstellung oben, eine Messmembran 7 über eine umlaufende Fügung 5 angeordnet ist. Die Fügung 5 ist im vorliegenden Ausführungsbeispiel aus einer ersten umlaufenden Glaslotschicht 5.1, die an dem Messzellenkörper 3 angeordnet ist, und einer zweiten umlaufenden Glaslotschicht 5.2, die an der Messmembran 7 angeordnet ist, gebildet. Bei der Herstellung der gezeigten Druckmesszelle 1 werden die beiden Glaslotschichten 5.1, 5.2 separat auf den Messzellenkörper 3 bzw. die Messmembran 7 aufgebracht und nach einer Anordnung der Messmembran 7 auf dem Messzellenkörper 3 verschmolzen. An dem Messzellenkörper 3 der vorliegenden Druckmesszelle 1 ist an einer der Messmembran 7 zugewandten Oberfläche eine Messelektrode 9 angeordnet, die in einem Abstand von einer Referenzelektrode 13 umgeben ist. Im vorliegenden Ausführungsbeispiel ist die Messelektrode 9 kreisförmig ausgebildet und die die umgebende Referenzelektrode 13 ringförmig.

An der Messmembran 7 ist an einer dem Messzellenkörper 3 zugeordneten Oberfläche ebenfalls eine Messelektrode 9 angeordnet, die im vorliegenden Fall aber vollflächig ausgeführt ist.

Durch die an der Messmembran 7 angeordnete Messelektrode 9 sowie die gegenüberliegend an dem Messzellenkörper 3 angeordneten Elektroden 9, 13 sind ein Messkondensator Cₘₑₛₛ sowie ein Referenzkondensator C_{ref} gebildet, mittels derer eine Druckbestimmung ermöglicht wird. Die an dem Messzellenkörper 3 sowie der Messmembran 7 angeordneten Elektroden 9, 13 sind im vorliegenden Ausführungsbeispiel mit einer beispielsweise hydrophoben Schutzschicht 15 überzogen, die Anlagerungen von Kondensat an den Elektroden verändert und damit eine Langzeitkorrosion unterbindet. Die hydrophobe Schutzschicht ist im vorliegenden Ausbildungsbeispiel als Verglasung 15 ausgeführt.

In dem in Figur 1 dargestellten Ausführungsbeispiel ist außerdem ein Stützelement 11 vorgesehen, dass als Stützring ausgebildet und zwischen der an dem Messzellenkörper 3 angeordneten Messelektrode 9 und der an dem Messzellenkörper 3 angeordneten Referenzelektrode 13 angeordnet ist.

Alternativ zu einer ringförmigen Ausgestaltung des Stützelements 11 ist auch die Anordnung einer Mehrzahl von Einzelstützelementen oder das Vorsehen mehrerer Stützringe denkbar.

Der vorliegend gezeigte Stützring 11 weist in radialer Richtung eine Erstreckung e von etwa 500 µm und eine Höhe h von ebenfalls 8 µm auf. Bei einem Abstand d der zueinander gewandten Oberflächen von Messzellenkörper 3 und Messmembran 7 von etwa 16 bis 20 µm und einer Anordnung des Stützrings mit einem Abstand von etwa 3 mm_ zu der umlaufend angeordneten Fügung 5 wird eine Abstützung der Messmembran 7 ab einem Überschreiten des maximal zulässigen Drucks um 50 % erreicht.

Auf diese Weise können insbesondere überhöhte Spannungen an der prozessseitigen Oberfläche der Messmembran 7 insbesondere im Bereich einer umlaufenden Innenkante der Fügung 5 erreicht werden, was zu einer deutlich verbesserten Langzeitstabilität der erreichbaren Messergebnisse trotz möglicher Überlastungen führt.

Figur 2 zeigt ein weiteres Ausführungsbeispiel einer Druckmesszelle 1, wobei im Unterschied zu dem Ausführungsbeispiel in Figur 1 das Stützelement 11, das auch in dem zweiten Ausführungsbeispiels als Stützring ausgeformt ist, an der dem Messzellenkörper 3 zugewandten Oberfläche der Messmembran 7 sitzt. Eine derartige Ausgestaltung kann alternativ zu der Figur 1 gezeigten Ausgestaltungsform gewählt werden, wobei in dem in Figur 2 dargestellten Ausführungsbeispiel darauf zu achten ist, dass die elastischen Eigenschaften der Messmembran 7 durch das Stützelement 11 nicht verändert werden.

Es sei an dieser Stelle darauf hingewiesen, dass weitere Ausführungsformen, insbesondere Ausführungsformen, bei denen sowohl an dem Messzellenkörper als auch an der Messmembran ein oder mehrere entsprechende Stützelemente 11 vorgesehen sind, denkbar sind, ohne vom Grundgedanken der vorliegenden Erfindung abzuweichen.

Bei der Herstellung der vorliegend gezeigten Druckmesszellen 1 kann der Stützring 11 beispielsweise aus dem gleichen Glaslot wie die umlaufenden Glaslotschichten 5.1, 5.2 hergestellt und damit gleichzeitig mit diesen auf die jeweilige Oberfläche des Messzellenkörpers 3 bzw. Messmembran 7 aufgebracht werden. In einem bevorzugten Verfahren werden sowohl die umlaufenden Glaslotschichten 5.1, 5.2 als auch das Stützelement 11 in einem Siebdruckverfahren aufgebracht und anschließend in einem Temperaturschnitt verschmolzen.

### Bezugszeichenliste

- 1: Druckmesszelle
- 3: Messzellenträger
- 5: Fügung
- 5.1: erste umlaufende Glaslotschicht
- 5.2: zweite umlaufende Glaslotschicht
- 7: Messmembran
- 9: Messelektroden

- 11: Stützelement
- 13: Referenzelektrode
- 15: Verglasung/Schutzschicht

- Cₘₑₛₛ: Messkondensator
- C_{ref}: Referenzkondensator
- Pₘₐₓ: maximaler Messdruck
- h: Höhe
- d: Abstand
- r: Radius
- e: Erstreckung

## Patentansprüche

1. Druckmesszelle (1) mit einem Messzellenkörper (3), einer vorderseitig an dem Messzellenkörper (3) mittels einer Fügung (5) angeordneten Messmembran (7), wobei der Messzellenkörper (3) und die Messmembran (7) jeweils wenigstens eine Messelektrode (9) aufweisen, die einen Messkondensator (Cₘₑₛₛ)bilden, wobei an der Messmembran (7) und/oder dem Messzellenkörper (3) innerhalb der Fügung (5) wenigstens ein Stützelement (11) vorgesehen ist,
**dadurch gekennzeichnet, dass** das wenigstens eine Stützelement (11) mittels eines Glaslots hergestellt ist, die Fügung (5) aus einer ersten umlaufenden Glaslotschicht (5.1), die an dem Messzellenkörper (3) angeordnet ist, und einer zweiten umlaufenden Glaslotschicht (5.2), die an der Messmembran (7) angeordnet ist, gebildet ist, und der Messzellenkörper (3) und/oder die Messmembran (7) eine Referenzelektrode (13) aufweisen, wobei die Messelektrode (9) des Messzellenkörpers (3) oder der Messmembran (7) in einem Abstand von der Referenzelektrode (13) umgeben ist, wobei diese Messelektrode (9) kreisförmig und die die umgebende Referenzelektrode (13) ringförmig ausgebildet sind, wobei die Referenzelektrode (13) und eine gegenüberliegende Messelektrode (9) des Messzellenkörpers (3) oder der Messmembran (7) einen Referenzkondensator (C_{ref}) bilden, wobei das wenigstens eine Stützelement (11) als wenigstens ein Stützring ausgebildet ist und der Stützring (11) zwischen der Referenzelektrode (13) und dieser Messelektrode (9) angeordnet ist.

2. Druckmesszelle (1) gemäß Anspruch 1,
**dadurch gekennzeichnet, dass** das eine Höhe (h) des wenigstens einen Stützelementes (11) und eine radiale Anordnung des wenigstens einen Stützelementes (11) derart aufeinander abgestimmt sind, dass das Stützelement (11) und die Messmembran (7) oder das Stützelement (11) und der Messzellenkörper (3)ab einer Überschreitung eines maximalen Messdruckes Pₘₐₓ von wenigstens 50 % in Anlage gebracht werden und das wenigstens eine Stützelement (11) die Messmembran (7) an dem Messzellenkörper (3) abstützt.

3. Druckmesszelle (1) gemäß einem der vorhergehenden Ansprüche,
**dadurch gekennzeichnet, dass** das wenigstens eine Stützelement (11) eine Höhe von 25% bis 60% eines Abstandes zwischen dem Messzellenkörper (3) und der Messmembran (7) aufweist und von der Fügung (5) zwischen 10% und 50% eines Radius (r) der Messzelle (1) nach innen versetzt angeordnet ist.

4. Druckmesszelle (1) gemäß einem der vorhergehenden Ansprüche,
**dadurch gekennzeichnet, dass** das wenigstens eine Stützelement (11) in Radialrichtung eine Erstreckung (e) zwischen 100 µm und 1000 µm aufweist.

5. Druckmesszelle (1) gemäß Anspruch 4,
**dadurch gekennzeichnet, dass** das wenigstens eine Stützelement (11) in Radialrichtung eine Erstreckung (e) von 500 µm aufweist.

6. Druckmesszelle (1) gemäß einem der vorhergehenden Ansprüche,
**dadurch gekennzeichnet, dass** das wenigstens eine Stützelement (11) eine Höhe (h) zwischen 5 µm und 15 µm aufweist.

7. Druckmesszelle (1) gemäß Anspruch 6,
**dadurch gekennzeichnet, dass** das wenigstens eine Stützelement (11) eine Höhe (h) von 8 µm aufweist.

8. Druckmesszelle (1) gemäß einem der vorhergehenden Ansprüche,
**dadurch gekennzeichnet, dass** der Stützring die Messelektrode (9) umgibt.

9. Druckmesszelle (1) gemäß einem der vorhergehenden Ansprüche,
**dadurch gekennzeichnet, dass** das wenigstens eine Stützelement (11) in Radialrichtung einen trapezförmigen oder rechteckigen Querschnitt aufweist.

10. Verfahren zum Herstellen einer Druckmesszelle (1) mit wenigstens folgenden Schritten:
- Bereitstellen eines Messzellenkörpers (3),
- Aufbringen einer Metallisierung auf den Messzellenkörper (3) zur Bildung einer Messelektrode (9),
- Aufbringen einer ersten umlaufenden Glaslotschicht (5.1) auf den Messzellenkörper (3),
- Bereitstellen einer Messmembran (7),
- Aufbringen einer Metallisierung auf die Messmembran (7) zur Bildung einer Messelektrode (9),
- Aufbringen einer zweiten umlaufenden Glaslotschicht (5.2) auf die Messmembran (7) und
- Anordnen von Messmembran (7) und Messzellenkörper (3) aufeinander und verschmelzen der ersten Glaslotschicht und der zweiten Glaslotschicht zur Bildung einer Fügung (5),
**dadurch gekennzeichnet, dass** gleichzeitig mit der ersten Glaslotschicht und/oder mit der zweiten Glaslotschicht eine weitere Glaslotschicht zur Bildung eines Stützelements aufgebracht wird, wobei der Messzellenkörper (3) und/oder die Messmembran (7) eine Referenzelektrode (13) aufweisen, wobei die Messelektrode (9) des Messzellenkörpers (3) und/oder der Messmembran (7) in einem Abstand von der Referenzelektrode (13) umgeben ist, wobei diese Messelektrode (9) kreisförmig und die die umgebende Referenzelektrode (13) ringförmig ausgebildet sind, wobei diese Messelektrode (9) und die Referenzelektrode (13) einen Referenzkondensator (C_{ref}) bilden, wobei das wenigstens eine Stützelement (11) als wenigstens ein Stützring ausgebildet ist und der Stützring (11) zwischen der Referenzelektrode (13) und dieser Messelektrode (9) angeordnet ist.

11. Verfahren nach Anspruch 10,
**dadurch gekennzeichnet, dass** die erste Glaslotschicht und/oder die zweite Glaslotschicht und/oder die weitere Glaslotschicht mit einem Siebdruckverfahren aufgebracht werden.

## Claims

1. Pressure measuring cell (1) comprising a measuring cell body (3), a measuring membrane (7) arranged on the front face of the measuring cell body (3) by means of a joining structure (5), the measuring cell body (3) and the measuring membrane (7) each having at least one measuring electrode (9), which electrodes⁽¹⁾ form a measuring capacitor (Cₘₑₛₛ), and at least one support element (11) being provided on the measuring membrane (7) and/or the measuring cell body (3) within the joining structure (5), **characterised in that** the at least one support element (11) is produced by means of a glass solder, **that** the joining structure (5) is formed from a first circumferential glass solder layer (5.1) arranged on the measuring cell body (3) and from a second circumferential glass solder layer (5.2) arranged on the measuring membrane (7), **and that** the measuring cell body (3) and/or the measuring membrane (7) have/has a reference electrode (13), the measuring electrode (9) of the measuring cell body (3) or of the measuring membrane (7) being surrounded at a distance by the reference electrode (13), this measuring electrode (9) being circular in form and the reference electrode (13) surrounding it being annular in form, the reference electrode (13) and an opposite measuring electrode (9) of the measuring cell body (3) or of the measuring membrane (7) forming a reference capacitor (C_{ref}), the at least one support element (11) being formed as at least one support ring and the support ring (11) being disposed between the reference electrode (13) and this measuring electrode (9).

2. Pressure measuring cell (1) in accordance with Claim 1, **characterised in that** the one height (h) of the at least one support element (11) and a radial arrangement of the at least one support element (11) are mutually coordinated in such a way that, when a maximum measuring pressure Pₘₐₓ of at least 50% is exceeded, the support element (11) and the measuring membrane (7) or the support element (11) and the measuring cell body (3) are brought into abutment and the at least one support element (11) supports the measuring membrane (7) on the measuring cell body (3).

3. Pressure measuring cell (1) in accordance with one of the preceding Claims, **characterised in that** the at least one support element (11) has a height of 25% to 60% of a distance between the measuring cell body (3) and the measuring membrane (7) and is inwardly offset from the joining structure (5) by between 10% and 50% of a radius (r) of the measuring cell (1).

4. Pressure measuring cell (1) in accordance with one of the preceding Claims, **characterised in that** the at least one support element (11) has in radial direction an extent (e) of between 100 µm and 1000 µm.

5. Pressure measuring cell (1) in accordance with Claim 4, **characterised in that** the at least one support element (11) has in radial direction an extent (e) of 500 µm.

6. Pressure measuring cell (1) in accordance with one of the preceding Claims, **characterised in that** the at least one support element (11) has a height (h) of between 5 µm and 15 µm.

7. Pressure measuring cell (1) in accordance with Claim 6, **characterised in that** the at least one support element (11) has a height (h) of 8 µm.

8. Pressure measuring cell (1) in accordance with one of the preceding Claims, **characterised in that** the support ring surrounds the measuring electrode (9).

9. Pressure measuring cell (1) in accordance with one of the preceding Claims, **characterised in that** the at least one support element (11) has in radial direction a trapezoidal or rectangular cross-section.

10. Method for the production of a pressure measuring cell (1) comprising at least the following steps:
- Preparation of a measuring cell body (3),
- Application of a metal coating to the measuring cell body (3) for the formation of a measuring electrode (9),
- Application of a first circumferential glass solder layer (5.1) to the measuring cell body (3),
- Preparation of a measuring membrane (7),
- Application of a metal coating to the measuring membrane (7) for the formation of measuring electrode (9),
- Application of a second circumferential glass solder layer (5.2) to the measuring membrane (7) and
- Positioning of measuring membrane (7) and measuring cell body (3) on each other and melting of the first glass solder layer and of the second glass solder layer for the formation of a joining structure (5),
**characterised in that** a further glass solder layer is applied simultaneously with the first glass solder layer and/or with the second glass solder layer for the formation of a support element, the measuring cell body (3) and/or the measuring membrane (7) having a reference electrode (13), the measuring electrode (9) of the measuring cell body (3) and/or of the measuring membrane (7) being surrounded at a distance by the reference electrode (13), this measuring electrode (9) being circular in form and the reference electrode (13) surrounding it being annular in form, this measuring electrode (9) and the reference electrode (13) forming a reference capacitor (C_{ref}), the at least one support element (11) being formed as at least one support ring and the support ring (11) being arranged between the reference electrode (13) and this measuring electrode (9).

11. Method in accordance with Claim 10, **characterised in that** the first glass solder layer and/or the second glass solder layer and/or the further glass solder layer are/is applied by means of a silk screen procedure.

## Revendications

1. Cellule de mesure de pression (1) comportant un corps de cellule de mesure (3) une membrane de mesure (7) montée à l'avant du corps de la cellule de mesure (3) au moyen d'une jointure (5), le corps de la cellule de mesure (3) et la membrane de mesure (7) comportant respectivement au moins une électrode de mesure (9) qui forme un condensateur de mesure (Cₘₑₛₛ), sur la membrane de mesure (7) et/ou sur le corps de cellules de mesure (3) à la partie interne de la jointure (5) étant prévu au moins un élément d'appui (11),
**caractérisée en ce que**
l'élément d'appui (11) est obtenu par une brasure vitreuse, la jointure (5) est formée par une première couche de brasure vitreuse périphérique (5, 1) qui est située sur le corps de la cellule de mesure (3) et par une seconde couche de brasure vitreuse périphérique (5, 2) qui est située sur la membrane de mesure (7), et le corps de la cellule de mesure (3) et/ou la membrane de mesure (7) comporte(nt) une électrode de référence (13), l'électrode de mesure (9) du corps de la cellule de mesure (3) ou de la membrane de mesure (7) est entourée à distance par l'électrode de référence (13), cette électrode de mesure (9) étant circulaire et l'électrode de référence (13) qui l'entoure étant annulaire, l'électrode de référence (13) et l'électrode de mesure située à l'opposé de celle-ci (9) du corps de la cellule de mesure (3) ou de la membrane de mesure (7) formant un condensateur de référence (C_{ref}), l'élément d'appui (11) étant réalisé sous la forme d'une bague d'appui et la bague d'appui (11) étant située entre l'électrode de référence (13) et cette électrode de mesure (9).

2. Cellule de mesure de pression (1) conforme à la revendication 1,
**caractérisée en ce que**
la hauteur (h) et la configuration radiale de l'élément d'appui (11) sont adaptées l'une à l'autre de sorte que l'élément d'appui (11) et la membrane de mesure (7) ou l'élément d'appui (11) et le corps de la cellule de mesure (3) soient mis en contact à partir d'un dépassement d'une pression de mesure maximum Pₘₐₓ d'au moins 50 %, et, l'élément d'appui (11) applique la membrane de mesure (7) sur le corps de la cellule de mesure (3).

3. Cellule de mesure de pression (1) conforme à l'une des revendications précédentes,
**caractérisée en ce que**
l'élément d'appui (11) a une hauteur égale à 25 % à 60 % de la distance entre le corps de la cellule de mesure (3) et la membrane de mesure (7), et, est décalé vers l'intérieur de la jointure (5) d'entre 10 % et 50 % du rayon (r) de la cellule de mesure (1).

4. Cellule de mesure de pression (1) conforme à l'une des revendications précédentes,
**caractérisée en ce que**
l'élément d'appui (11) a en direction radiale une extension (e) comprise entre 100 µm et 1000 µm.

5. Cellule de mesure de pression (1) conforme à la revendication 4,
**caractérisée en ce que**
l'élément d'appui (11) a en direction radiale une extension (e) de 500 µm.

6. Cellule de mesure de pression (1) conforme à l'une des revendications précédentes,
**caractérisée en ce que**
l'élément d'appui (11) a une hauteur (h) comprise entre 5 µm et 15 µm.

7. Cellule de mesure de pression (1) conforme à la revendication 6,
**caractérisée en ce que**
l'élément d'appui (11) a une hauteur (h) de 8 µm.

8. Cellule de mesure de pression (1) conforme à l'une des revendications précédentes,
**caractérisée en ce que**
la bague d'appui entoure l'électrode de mesure (9).

9. Cellule de mesure de pression (1) conforme à l'une des revendications précédentes,
**caractérisée en ce que**
l'élément d'appui (11) a en direction radiale une section en forme de trapèze ou de rectangle.

10. Procédé de fabrication d'une cellule de mesure de pression (1) comprenant au moins les étapes suivantes consistant à :
- se procurer un corps de cellule de mesure (3),
- appliquer une métallisation sur le corps de la cellule de mesure (3) pour former une électrode de mesure (9),
- appliquer une première couche de brasure vitreuse périphérique (5, 1) sur le corps de la cellule de mesure (3),
- se procurer une membrane de mesure (7),
- appliquer métallisation sur la membrane de mesure (7) pour former une électrode de mesure (9),
- appliquer une seconde couche de brasure vitreuse périphérique (5, 2) sur la membrane de mesure (7), et
- positionner la membrane de mesure (7) et le corps de la cellule de mesure (3) l'un sur l'autre et faire fondre la première couche de brasure vitreuse et la seconde couche de brasure vitreuse pour former une jointure (5),
**caractérisée en ce que**
simultanément à la première couche de brasure vitreuse et/ou à la seconde couche de brasure vitreuse on applique une autre couche de brasure vitreuse pour former un élément d'appui, le corps de la cellule de mesure (3) et/ou la membrane de mesure (7) comportant une électrode de référence (13), l'électrode de mesure (9) du corps de la cellule de mesure (3) et/ou de la membrane de mesure (7) étant entourée(s) à distance par l'électrode de référence (13), cette électrode de mesure (9) étant circulaire et l'électrode de référence (13) qui l'entoure étant annulaire, cette électrode de mesure (9) et l'électrode de référence (13) formant un condensateur de référence (C_{ref}), l'élément d'appui (11) étant réalisé sous la forme d'au moins une bague d'appui, et la bague d'appui (11) étant positionnée entre l'électrode de référence (13) et cette électrode de mesure (9).

11. Procédé conforme à la revendication 10,
**caractérisé en ce que**
la première couche de brasure vitreuse et/ou la seconde couche de brasure vitreuse et/ou l'autre couche de brasure vitreuse est(sont) appliquée(s) par un procédé de sérigraphie.
